# EUROPEAN PATENT SPECIFICATION

(11) **EP 0 901 739 B1**
(45) Date of publication and mention of the grant of the patent: **22.05.2002**
(21) Application number: 97908160.1
(22) Date of filing: 03.03.1997
(51) Int. Cl.: H04Q 7/32

(54) **METHOD FOR CONFIGURING RADIO UNIT**
VERFAHREN ZUR KONFIGURATION EINER FUNKEINHEIT
PROCEDE POUR CONFIGURER UNE UNITE RADIO

(30) Priority: 24.05.1996 GB 9610954
(43) Date of publication of application: 17.03.1999
(73) Proprietor: MOTOROLA GmbH, 65232 Taunusstein (DE)
(72) Inventor: LEHR, Bernd, Jurgen, D-65232 Taunusstein (DE); LENGER, Egbert, Christof, D-65329 Hohenstein (DE); TETZ, Klaus, Martin, D-65232 Taunusstein (DE)
(74) Representative: Morgan, Marc
(86) International application number: EP9701043
(87) International publication number: WO9746037

(56) References cited:
- EP-A- 0 173 102
- GB-A- 2 253 545
- GB-A- 2 292 653
- US-A- 5 483 465
- KAHAN A ET AL: "AN IMPROVED METHOD FOR PARAMETERS DOWNLOAD" MOTOROLA TECHNICAL DEVELOPMENTS, vol. 18, 1 March 1993, pages 163-167, XP000349612

## Description

### Field of the Invention

This invention relates to the configuration of radio units via a memory element. The invention is applicable to, but not limited to, the re-programming of flash devices in wireless communication units using radio service software.

### Background of the Invention

Most wireless communication units contain programmable memory elements. Such programmable memory elements often contain information about the communication unit model and/or specific data relating to the communication unit. With mobile and portable radio units, the specific data in the memory element is used to control the functionality of the radio unit. Programming the memory element is performed via a computer (PC) downloading or reading information of a radio unit via a 'codeplug' of the radio unit, where information in the memory element can be read, modified and (re)written by using Radio Service Software (RSS) over a serial connection to the radio unit. This data can also be stored on a disk for back up purposes.

In the past, every 'codeplug file' on a disk could only be used for one radio unit (the radio unit with the same model number as in the file). Every attempt to read a file of a radio unit having a different model number to the one stipulated in the codeplug file is prevented as the structure of the data is different.

For this reason, it is necessary to enter the complete data for each and every radio unit into the respective codeplug file, even if their data is very similar, for example, entering the complete channel data for every radio unit, even if their data differed only in the power level.

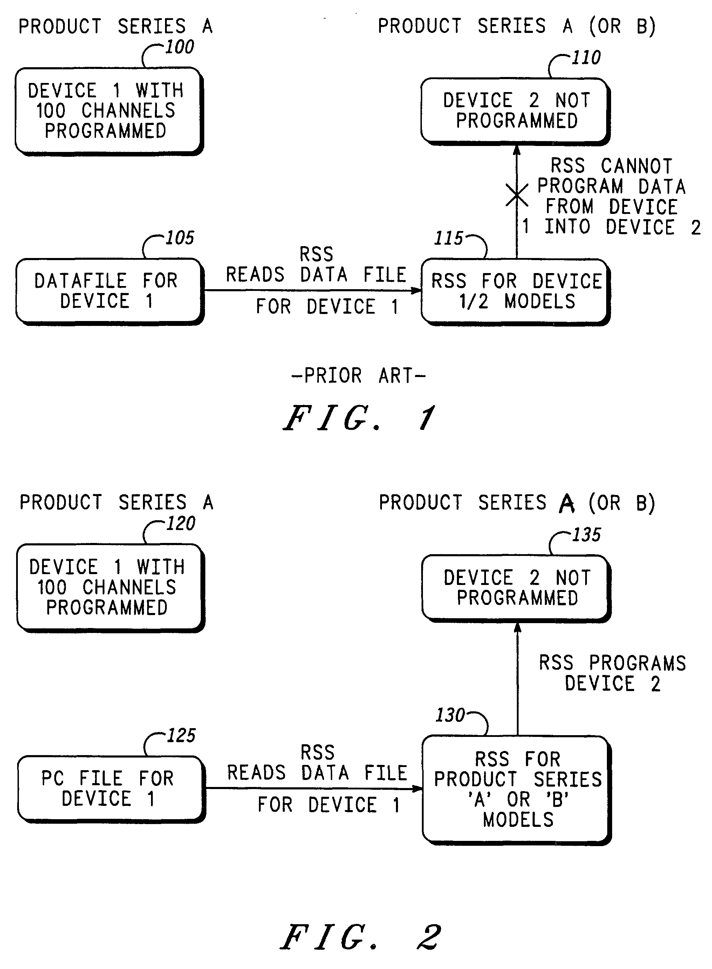

FIG. 1 highlights the problems with the prior art programming of radio units via a codeplug file. A first radio unit 100, of product series 'A' has been programmed with data including 100 allocated frequency channels. A second radio unit 110, of product series 'A' has not been programmed. A RSS is able to read a first data file 105 for the first radio unit 100, but not re-use relevant data blocks of the first data file 105, that are equally applicable to a second data file 115 of the second radio unit 110. As shown, it is not possible to use common data of that radio product series, stored in say, a first radio unit in the re-programming of the common data into a second radio unit.

The data file for the Motorola Storno CQM6000 (Trade Mark) radio unit uses a readable (ASCII) data format. This data file is structured in a functional manner, e.g. all channel related data for every variation of radio product is organised in a block structure, irrespective of whether it is product specific or not.

Some radio service software packages have the capability to 'clone' radio data. This process copies data from one radio unit into one or more other radio units. This process works only with radio units of the same product series and identical models.

GB 2253545 provides a radio having an adaptive memory to be used by field service centres, in the situation where a user has a defective radio, to give a radio user immediate access to a radio system whilst the defective radio is being repaired.

This invention seeks to provide a method of programming such communication units, to mitigate the problems of excessive storage of information as highlighted above.

### Summary of the Invention

In a preferred embodiment of the present invention, a method of configuring a first radio unit is provided. The method includes the steps of reading data blocks from a second memory element of a second radio unit into a computer, processing the data blocks in the computer and partitioning at least product specific data blocks into a first memory block of the computer and partitioning at least common data blocks into a second memory block of the computer. The at least common data blocks from the second memory block of the computer are then programmed into a first memory element of the first radio unit.

Advantageously, the partitioning of data blocks into generic functional portions enables a first radio unit to be programmed using data from a second radio unit when the second radio unit does not belong to the same product series or product type as the first radio unit.

In addition, data re-use of radio units is maximised and the independent nature of the configuration method reduces radio configuration and re-configuration times and memory requirements.

A preferred embodiment of the invention will now be described, by way of example only, with reference to the drawings.

### Brief Description of the Drawings

FIG. 1 is a block diagram of a prior art limitation of radio service software programming.
FIG. 2 is a block diagram showing an arrangement of radio service software programming according to a preferred embodiment of the invention.
FIG. 3 is a flow chart showing a method of configuring a first radio unit with common data from a second radio unit, according to a preferred embodiment of the invention.

### Detailed Description of the Drawings

Referring first to FIG. 2, a block diagram showing an arrangement of radio service software programming according to a preferred embodiment of the invention. The first radio unit 120, of product series 'A' has been programmed with data including, amongst other parameters say, 100 allocated frequency channels. A second radio unit 135, of product series 'A' or 'B' has not been programmed or requires re-programming to join a different radio group. A RSS is able to read a first data file 125 for the first radio unit 120, and re-uses relevant data blocks of the first data file 125, that are equally applicable to a second data file 130 of the second radio unit 135. It is now possible to use common data of that radio product series, stored in say, a first radio unit in the re-programming of the common data into a second radio unit.

Advantageously, the new wireless communication device data interchange file (data block) structure is product independent although it contains all the data required for specific modes of operation. The common data block is used to interchange the common part of the radio unit's data between totally different radio units, independent to their particular hardware platforms. It is now possible to merge, amongst other data, channel data from mobile radios with the products specific data of a portable by programming the portable with the common part of the channel data of the mobile radio. The common data block is independent from the structure of the physical storage of a device and also independent from the user interface of a RSS. Due to the fact that the data format is no longer product specific, setting up the factory programming is much easier. The common data block being reused for every new product. It is within the contemplation of the invention that the common data block can be further sub-divided into common data sub-blocks and heirarchically organised such that portions of the common data are retrieved, read, merged or according to any other data functioning process, as desired, e.g. sub-dividing the common data block to mobile and portable power levels should they be different to each other, but common to all other mobile and portable radio units.

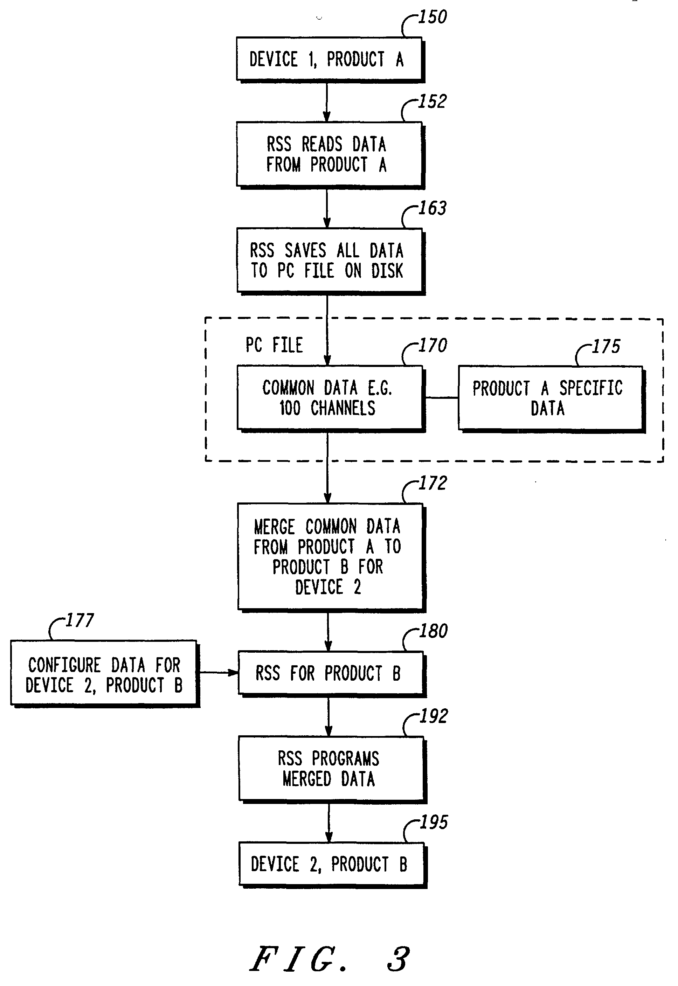

Referring to FIG. 3, a flow chart is provided showing a method of configuring a first radio unit with common data from a second radio unit, according to a preferred embodiment of the invention. The method includes the steps of a radio service software (RSS) reading data from a first radio unit of product type 'A', as shown in step 152. The RSS saves all the data to a memory element, as in step 163. The data is stored in at least two distinct areas on say, a computer: at least one common data block, as shown in step 170 and a radio unit specific data block, as shown in step 175. The common data from the first radio unit is then merged (programmed) to the second radio unit, as in step 172. If required, the RSS programs the radio unit specific data blocks of the first radio unit as shown in step 177 and step 180. The data for the first radio unit is merged, as in step 192, and the first radio is programmed for operation, as shown in step 195.

In the preferred embodiment of the invention, the common data blocks are in ASCII format and may include any or all of the following: frequency channel data, channel numbers, channel names, channel bandwidth, pre-emphasis, de-emphasis, frequency deviation, noise canceller data, signalling data, squelch type, PL/DPL data, programming data, push-to-talk time out data and power level data. The product specific data blocks may include any or all of the following: system data including conventional, trunking or secure, alignment data, device specific data and interface data.

A typical scenario where the preferred embodiment of the invention is especially advantageous is where mobile 'A' and base 'A' have different hardware, application software and a different codeplug layout to mobile 'B' and base 'B'. Radio system 'A', with base 'A', and mobile 'A' radio units, plans to expand its coverage area and/or number of radio users by combining additional units of base 'B' and mobile 'B' design into the system. All radio units in the system must use the same set of frequency channels and signalling features by which to communicate. Previously, a dealer uses the RSS for the new base 'B' and types in all such common data (channel data, signalling parameter etc.). This may well introduce human error into the programming function. Then the dealer programs the data into the each of the base 'B' designs. For the mobile 'B' radio units, the dealer uses the RSS for the mobile 'B' and dealer programs the data into the each of the mobile 'B' designs.

Using the preferred embodiment of the invention, the dealer now only requires the "common" data from any of the base 'A' or mobile 'A' radio units to program all of the base 'B' or mobile 'B' radio units. Any special device data may then be added if required, which may not be the case, resulting in a much more streamlined process of re-configuring the radio units. It is within the contemplation of the invention that it is possible to read out the common data direct from a radio unit (not using a data file stored on disk or computer). The selection of the ASCII character set makes it possible to transfer and read data from every computer platform. Hence, the data file is a fully transparent raw ASCII file which can be loaded with every editor or text tool.

In addition, the time to set-up the data in a radio unit is reduced, by using a common file format for all devices and reusing common data. The common data blocks are reused for all programming tools. This is performed with the RSS and the factory programmer. Both tools use exactly the same source and will still operate on different hardware platforms. Significantly, this invention also reduces any development time associated with designing the factory programmer and ensures compliance between the different programming tools.

Thus a method of configuring communication units is provided that reduces the amount of information storage, typically required, in radio service software applications, speeds up a programming or re-configuration time and allows significant re-use improvements over previous radio service software processes.

## Claims

1. A method of configuring a first radio unit (135), the method comprising the steps of:
reading (153) data blocks from a second memory element of a second radio unit (120) into a computer;
processing the data blocks in the computer;
the method **characterised by**:
partitioning at least product specific data blocks into a first memory block of the computer;
partitioning at least common data blocks into a second memory block of the computer;
programming (192) the at least common data blocks from the second memory block of the computer into a first memory element of the first radio unit (135).

2. The method of configuring a first radio unit according to claim 1, wherein the first radio unit (135) does not belong to a same product series or product type as the second radio unit (120).

3. The method of configuring a first radio unit (135) according to any of the preceding claims, wherein the method is performed during a factory set up of the first radio unit (135) using radio service software and independent use of common data blocks and product specific data blocks reduces a set-up time of the first radio unit (135).

4. The method of configuring a first radio unit (135) according to any of the preceding claims, wherein the common data blocks are in ASCII format and include at least one of the following: frequency channel data, channel numbers, channel names, channel bandwidth, pre-emphasis, de-emphasis, frequency deviation, noise canceller data, signalling data, squelch type, PL/DPL data, programming data, push-to-talk time out data and power level data.

5. The method of configuring a first radio unit according to any of the preceding claims, wherein the common data blocks are hierarchically organised to provide common data sub-blocks.

6. The method of configuring a first radio unit according to any of the preceding claims, wherein the product specific data blocks include at least one of the following: system data including conventional, trunking or secure, alignment data, device specific data and interface data.

## Patentansprüche

1. Verfahren zur Konfiguration einer ersten Funkeinheit (135), wobei das Verfahren folgende Schritte umfasst:
- Lesen (153) von Datenblöcken von einem zweiten Speicherelement einer zweiten Funkeinheit (120) in einen Computer;
- Verarbeiten der Datenblöcke in dem Computer;
wobei das Verfahren **gekennzeichnet ist durch**:
- das Aufteilen von mindestens produktspezifischen Datenblöcken in einen ersten Speicherblock des Computers;
- das Aufteilen von mindestens gemeinsamen Datenblöcken in einen zweiten Speicherblock des Computers;
- das Programmieren (192) der mindestens gemeinsamen Datenblöcke aus dem zweiten Speicherblock des Computers in ein erstes Speicherelement der ersten Funkeinheit (135).

2. Verfahren zur Konfiguration einer ersten Funkeinheit gemäß Anspruch 1, bei dem die erste Funkeinheit (135) nicht zu derselben Produktreihe oder demselben Produkttyp wie die zweite Funkeinheit (120) gehört.

3. Verfahren zur Konfiguration einer ersten Funkeinheit (135) gemäß einem der vorhergehenden Ansprüche, bei dem das Verfahren während einer Werkseinstellung der ersten Funkeinheit (135) unter Verwendung von Funkdienstsoftware ausgeführt wird und die unabhängige Verwendung gemeinsamer Datenblöcke und produktspezifischer Datenblöcke eine Einstellungszeit der ersten Funkeinheit (135) reduziert.

4. Verfahren zur Konfiguration einer ersten Funkeinheit (135) gemäß einem der vorhergehenden Ansprüche, bei dem die gemeinsamen Datenblöcke im ASCII-Format vorliegen und mindestens eines der folgenden Elemente umfassen: Frequenzkanaldaten, Kanalnummern, Kanalnamen, Kanalbandbreite, Vorverzerrung beziehungsweise Verstärkungsverschiebung, Entzerrung beziehungsweise Abschwächung, Frequenzabweichung, Rauschunterdrückungsdaten, Signalisierungsdaten, Rauschsperrentyp, PL/DPL-Daten, Programmierungsdaten, Sprech- beziehungsweise PTT-Auszeitdaten und Leistungspegeldaten.

5. Verfahren zur Konfiguration einer ersten Funkeinheit gemäß einem der vorhergehenden Ansprüche, bei dem die gemeinsamen Datenblöcke hierarchisch organisiert sind, um gemeinsame Datenunterblöcke bereitzustellen.

6. Verfahren zur Konfiguration einer ersten Funkeinheit gemäß einem der vorhergehenden Ansprüche, bei dem die produktspezifischen Datenblöcke mindestens eines der folgenden Elemente umfassen: Systemdaten einschließlich herkömmlicher, Bündelungs- oder Sicherheitsdaten, Synchronisationsbeziehungsweise Gleichlaufdaten, vorrichtungsspezifische Daten und Schnittstellendaten.

## Revendications

1. Procédé permettant de configurer une première unité radio (135), le procédé comprenant les opérations suivantes :
lire (153) des blocs de données dans un deuxième élément de mémorisation d'une deuxième unité radio (120) pour les faire passer dans un ordinateur ;
traiter les blocs de données dans l'ordinateur ;
le procédé étant **caractérisé par** les opérations suivantes :
placer à part, dans un premier bloc de mémorisation de l'ordinateur, au moins des blocs de données spécifiques à un produit ;
placer à part, dans un deuxième bloc de mémorisation de l'ordinateur, au moins des blocs de données communes ;
programmer (192) ce qui a été appelé "au moins des blocs de données communes" pour les faire passer du deuxième bloc de mémorisation de l'ordinateur jusque dans un premier élément de mémorisation de la première unité radio (135).

2. Procédé de configuration d'une première unité radio (135) selon la revendication 1, où la première unité radio (135) n'appartient pas à une même série de produits ou un même type de produit que la deuxième unité radio (120).

3. Procédé de configuration d'une première unité radio (135) selon la revendication 1 ou 2, où le procédé est effectué pendant le réglage d'usine de la première unité radio (135) au moyen d'un logiciel de services radiotéléphoniques, et l'utilisation indépendante des blocs de données communes et des blocs de données spécifiques au produit réduit le temps de réglage de la première unité radio (135).

4. Procédé de configuration d'une première unité radio (135) selon l'une quelconque des revendications précédentes, où les blocs de données communes sont dans le format ASCII et comprennent l'une quelconque des données suivantes : données des canaux de fréquence, numéros des canaux, noms des canaux, largeur de bande des canaux, préaccentuation, désaccentuation, écart de fréquence, données d'annulation de bruit, données de signalisation, type de silencieux, données PL/DPL, données de programmation, données de temps d'épuisement du bouton de conversation, et données de niveaux de puissance.

5. Procédé de configuration d'une première unité radio (135) selon l'une quelconque des revendications précédentes, où les blocs de données communes sont organisés hiérarchiquement de manière à produire des sous-blocs de données communes.

6. Procédé de configuration d'une première unité radio (135) selon l'une quelconque des revendications précédentes, où les blocs de données spécifiques à un produit comportent au moins l'une des données suivantes : données système comportant des données d'alignement, de, liaison ou de sécurité, classiques, des données spécifiques à des dispositifs, et des données d'interface.
